# EUROPÄISCHE PATENTANMELDUNG

(11) **EP 3 550 173 A1**
(43) Veröffentlichungstag der Anmeldung: **09.10.2019**
(21) Anmeldenummer: 19162091.3
(22) Anmeldetag: 12.03.2019
(51) Int. Cl.: F16F 1/368

(54) **BLATTFEDEREINRICHTUNG FÜR EIN FAHRZEUG, FAHRWERK MIT EINER SOLCHEN BLATTFEDEREINRICHTUNG SOWIE EIN VERFAHREN ZUM HERSTELLEN EINER SOLCHEN BLATTFEDEREINRICHTUNG UND/ODER EINES SOLCHEN FAHRWERK**

(30) Priorität: 06.04.2018 DE 102018205215
(71) Anmelder: ZF Friedrichshafen AG, 88046 Friedrichshafen (DE)
(72) Erfinder: Pleyer, Marcel, 49326 Melle (DE); Rupflin, Thomas, 88719 Stetten (DE); Siddiqui, Sami Uddin, 49448 Lemförde (DE); Hacker, Clemens, 49074 Osnabrück (DE)

(57) **Zusammenfassung**

Die Erfindung betrifft eine Blattfedereinrichtung (1, 101) für ein Fahrzeug mit einem Federblatt (2, 102) aus einem faserverstärkten Kunststoff. Um die Steifigkeit der Blattfedereinrichtung (1, 101) mit zunehmender Federbelastung erhöhen und/oder eine progressive Federung realisieren zu können, ist diese gekennzeichnet durch einen Innenraum (5, 6, 105, 106), wobei der Innenraum (5, 6, 105, 106) mindestens teilweise oder vollständig mit einem elastischen Material (12, 112) ausgefüllt ist.

## Beschreibung

Die Erfindung betrifft eine Blattfedereinrichtung für ein Fahrzeug mit einem Federblatt aus einem faserverstärkten Kunststoff. Des Weiteren betrifft die Erfindung ein Fahrwerk mit einer solchen Blattfedereinrichtung sowie ein Verfahren zum Herstellen einer solchen Blattfedereinrichtung und/oder eines solchen Fahrwerks.

Eine derartige Blattfedereinrichtung ist aus der DE 10 2010 015 951 A1 bekannt. Hiernach ist ein progressiver Verlauf einer Kraft-Weg-Kennlinie ermöglicht, wenn eine Blattfedereinrichtung verwendet wird, die aus mehreren Federblättern zusammengesetzt ist, die jeweils in geeigneter Weise ausgestaltet und miteinander verbunden bzw. in einem Federblattverbund angeordnet sind.

Des Weiteren sind Blattfedereinrichtungen aus Metall bekannt, bei denen mehrere Federblätter aus Metall verschiedener Länge und/oder Anzahl verwendet werden, um eine progressive Federung zu realisieren. Hierbei wirkt mindestens eines dieser Federblätter erst ab einem bestimmen bzw. vorgegebenen Federweg, wodurch die Steifigkeit der Blattfedereinrichtung erhöht wird. Eine derartige sich erhöhende Steifigkeit der Blattfedereinrichtung und/oder progressive Federung wird beispielsweise für Fahrzeuge bestimmter Gewichtsklassen oder Fahrzeuge mit hoher Zuladung gefordert. Hierdurch kann eine nahezu gleichbleibende Aufbau-Eigenfrequenz gewährleistet werden, was die Fahrsicherheit erhöht.

Bei einer mehrblättrigen Blattfedereinrichtung mit mindestens einem Federblatt aus einem faserverstärkten Kunststoff besteht jedoch insbesondere bei einer mehrblättrigen Ausbildung die Gefahr, dass es im Bereich einer Anlage des Federblattes aus dem faserverstärkten Kunststoff mit mindestens einem weiteren Federblatt zu einer unerwünschten Beschädigung kommt. Insbesondere kann ein Eintrag von Schmutzpartikeln und/oder Abrieb im Bereich einer Kontaktfläche des Federblattes aus dem faserverstärkten Kunststoff mit dem mindestens einem weiteren Federblatt zu einer unerwünschten Beschädigung der Blattfedereinrichtung führen, wodurch die Betriebsfähigkeit gefährdet und/oder die Betriebsdauer der Blattfedereinrichtung reduziert sein kann. Somit ist eine sich erhöhende Steifigkeit und/oder eine progressive Federung bei einer mehrblättrigen Blattfedereinrichtung mit mindestens einem Federblatt aus einem Faserkunststoffverbund, insbesondere Glasfaserkunststoffverbund, nicht ohne Weiteres realisierbar.

Es ist die der Erfindung zu Grunde liegende Aufgabe, eine Blattfedereinrichtung, ein Fahrwerk und/oder ein Verfahren der eingangs genannten Art derart weiterzuentwickeln, dass bei Verwendung einer Blattfedereinrichtung mit einem Federblatt aus einem faserverstärkten Kunststoff sich die Steifigkeit der Blattfedereinrichtung mit zunehmender Federbelastung erhöht und/oder eine progressive Federung realisierbar ist. Insbesondere soll eine alternative Ausführungsform bereitgestellt werden.

Die der Erfindung zu Grunde liegende Aufgabe wird mit einer Blattfedereinrichtung nach Anspruch 1, einem Fahrwerk nach Anspruch 15 und/oder einem Verfahren nach Anspruch 16 gelöst. Bevorzugte Weiterbildungen der Erfindung finden sich in den Unteransprüchen und in der nachfolgenden Beschreibung.

Die Blattfedereinrichtung ist zum Einsatz in einem Fahrzeug und/oder Kraftfahrzeug ausgebildet. Insbesondere ist die Blattfedereinrichtung in einem Fahrwerk eines Fahrzeugs und/oder Kraftfahrzeugs angeordnet. Hierbei kann die Blattfedereinrichtung mit einer Achse, einer Starrachse, einer Radachse, einem Radträger und/oder einem Querlenker verbunden sein. Die Achse kann als eine Hinterachse oder als eine Vorderachse ausgebildet sein. Hierbei kann die Blattfedereinrichtung in Längsrichtung oder in Querrichtung zur Fahrzeuglängsachse angeordnet werden. Die Blattfedereinrichtung weist mindestens ein oder ein einziges Federblatt auf. Das Federblatt ist aus einem faserverstärkten Kunststoff und/oder einem Kunststofffaserverbund gebildet. Bei einer erfindungsgemäßen Blattfedereinrichtung ist ein Innenraum vorgesehen. Der Innenraum ist mindestens teilweise oder vollständig mit einem elastischen Material ausgefüllt. Alternativ ist der Innenraum unausgefüllt. In diesem Fall weist der Innenraum somit keine teilweise oder vollständige Füllung auf.

Hierbei ist von Vorteil, dass aufgrund des Vorsehens eines Innenraumes, der insbesondere teilweise oder vollständig mit einem elastischen Material ausgefüllt ist, die Federeigenschaften der Blattfedereinrichtung in Abhängigkeit vom Federweg und/oder einer Federbelastung veränderbar sind. Insbesondere kann die Steifigkeit der Blattfedereinrichtung mit zunehmender Federbelastung erhöht werden und/oder eine progressive Federung realisierbar sein. Der Innenraum kann offen oder geschlossen ausgebildet sein. Der Innenraum kann als ein Aufnahmeraum, insbesondere für das elastische Material, ausgebildet sein oder bezeichnet werden.

Die Blattfedereinrichtung kann eine Halteeinrichtung zum Verbinden der Blattfedereinrichtung und/oder des Federblattes mit einer Achse aufweisen. Die Halteeinrichtung kann eine Lagerung des Federblattes realisieren. Insbesondere ist aufgrund der Lagerung und/oder mittels der Halteeinrichtung eine Verformung des Federblattes ermöglicht. Somit kann aufgrund der Halteeinrichtung und/oder der Lagerung das Federblatt, insbesondere mindestens ein Federblattabschnitt, verformt werden. Insbesondere handelt es sich bei dem Federblattabschnitt um einen Teilbereich des Federblattes. Der Federblattabschnitt kann zwischen zwei Enden des Federblattes angeordnet sein. Vorzugsweise ist der Federblattabschnitt von den Enden des Federblattes beabstandet. Insbesondere ist der Federblattabschnitt im Bereich des Innenraums angeordnet. Der Federblattabschnitt kann den Innenraum mindestens teilweise oder vollständig umgeben. Vorzugsweise ist der Innenraum in dem Federblattabschnitt angeordnet und/oder der Innenraum ist aufgrund des Federblattabschnittes gebildet. Vorzugsweise ist unter einer Verformung eine Biegung zu verstehen. Die Verformung kann elastisch ausgebildet sein. Insbesondere ist die Verformung oder eine Biegung des Federblattes in eine Richtung quer- oder rechtwinklig zur Längserstreckung des Federblattes und/oder einer Längsachse der Achse gerichtet. Vorzugsweise weist das Federblatt, insbesondere in einem unbelasteten Zustand der Blattfedereinrichtung, eine gekrümmte oder gebogene Gestalt auf.

Ein unbelasteter Zustand der Blattfedereinrichtung kann sich auf einen unmontierten Zustand der Blattfedereinrichtung bezüglich der Montage in einem Fahrwerk und/oder Fahrzeug beziehen. Alternativ kann sich der unbelastete Zustand der Blattfedereinrichtung auf einen in einem Fahrzeug und/oder Fahrwerk montierten Zustand der Blattfedereinrichtung beziehen, wobei auf das Federblatt eine Federbelastung wirkt, die maximal der Federbelastung in einem Leerzustand oder in einem unbeladenen Zustand des Fahrzeugs entspricht

Gemäß einer Weiterbildung ist das elastische Material zwischen einer Innenseite des Innenraums und einem Federblattabschnitt des Federblattes angeordnet. Insbesondere liegt das elastische Material einerseits an einer Innenseite des Innenraumes und andererseits an einer Innenseite oder einem Außenumfang des Federblattabschnittes an. Hierbei kann das elastische Material fest mit der Innenseite des Innenraumes und/oder fest mit der Innenseite oder dem Außenumfang des Federblattabschnittes verbunden sein. Vorzugsweise handelt es sich bei dem elastischen Material um ein Elastomermaterial. Bei einem Elastomermaterial kann es sich um einen elastisch verformbaren Kunststoff und/oder um ein elastisch verformbares Gummimaterial handeln. Somit kann als elastisches Material ein elastisches Kunststoffmaterial oder ein elastisches Gummimaterial verwendet werden. Insbesondere ist das elastische Material komprimierbar, beispielsweise als ein geschäumtes Elastomer, ausgebildet. Vorzugsweise ist das elastische Material inkompressibel bzw. nichtkomprimierbar. Das elastische Material und/oder das Elastomermaterial kann sich bei Zug- und/oder Druckbelastung elastisch verformen. Insbesondere kann das elastische Material nach einem Einwirken einer Kraft in seine Ausgangsform zurückkehren.

Aufgrund des Innenraumes und/oder eines Zusammenwirkens des elastischen Materials und des dem Innenraum zugeordneten Federblattabschnittes des Federblattes kann eine die Steifigkeit der Blattfedereinrichtung erhöhende Federung und/oder eine progressive Federung realisiert sein. Insbesondere ergibt sich eine die Steifigkeit der Blattfedereinrichtung erhöhende Federung und/oder eine progressive Federung bei einer sich mit steigender Federbelastung zunehmenden Biegung des Federblattes. Insbesondere wird bei einer progressiven Federung und/oder progressiven Federkennlinie eine Steifigkeit der Blattfedereinrichtung ab einer vorgegebenen Federbelastung und/oder mit einer steigenden Federbelastung erhöht. Vorzugsweise kann mittels einer progressiven Federung bei einem ansteigenden Beladungszustand für ein Fahrzeug eine höhere bzw. ansteigende Federrate realisiert werden. Die Steifigkeit kann sich, insbesondere ab der vorgegebenen Federbelastung, kontinuierlich oder exponentiell erhöhen oder vergrößern. Alternativ kann sich die Steifigkeit, insbesondere ab der vorgegebenen Federbelastung, in einem bestimmten, begrenzten oder vorgegebenen Federbereich oder Federbelastungsbereich steigern oder ändern. Bei einer weiteren vorgegebenen Federbelastung kann eine bestimmte Steifigkeit erreicht werden, die bei weiter zunehmender Federblastung konstant bleibt. Hierbei kann die Steifigkeit mit zunehmender Federbelastung gemäß einer asymptotischen Funktion bis zu der bestimmten oder einer maximalen Steifigkeit gesteigert werden.

Vorzugsweise bewirkt der Innenraum und/oder das elastische Material, insbesondere bis zu einer vorgegebenen Federbelastung und/oder bis zu einer vorgegebenen einwirkenden Federkraft, eine mindestens teilweise Entkopplung des Federblattabschnittes von dem Federblatt. Bis zum Erreichen der vorgegebenen Federbelastung und/oder einwirkenden Federkraft kann eine Biegebelastung nicht oder nur teilweise von dem Federblattabschnitt, insbesondere über das elastische Material, zusammen mit den weiteren Teilen des Federblattes zusammenwirken. Erst ab der vorgegebenen Federbelastung und/oder einwirkenden Federkraft kann der Federblattabschnitt zusammen mit den weiteren Teilen des Federblattes auf Biegung belastet werden. Insbesondere kann das elastische Material ab der vorgegebenen Federbelastung und/oder einwirkenden Federkraft nicht weiter verformt werden, sondern bei abnehmender Federbelastung und/oder einwirkenden Federkraft nur noch aus einem maximal verformten Zustand in Richtung seiner Ausgangsform zurückkehren.

Bis zum Erreichen der vorgegebenen Federbelastung und/oder einwirkenden Federkraft kann der Federblattabschnitt, insbesondere vorwiegend, auf Streckung belastet werden. Der Federblattabschnitt kann, insbesondere elastisch, verformt werden. Unter einer Verformung kann eine Torsion und/oder eine Biegung verstanden werden. Bis zum Erreichen der vorgegebenen Federbelastung kann der Federblattabschnitt vorwiegend auf Streckung belastet werden, während der Federblattabschnitt ab der vorgegebenen Federbelastung und mit zunehmender Federbelastung vorwiegend auf Biegung belastet wird. Hierbei kann die Streckbelastung des Federblattabschnittes ab der vorgegebenen Federbelastung und mit zunehmender Federbelastung im Wesentlichen konstant bleiben, ebenfalls weiter zu nehmen oder abnehmen.

Insbesondere sind das Federblatt, der Federblattabschnitt und das elastische Material zum Realisieren einer die Steifigkeit der Blattfedereinrichtung erhöhenden Federung und/oder einer progressiven Federung ausgebildet, wobei ausgehend von einem unbelasteten Zustand der Blattfedereinrichtung das elastische Material mit steigender Federbelastung zunehmend komprimiert wird. Vorzugsweise wird hierdurch zunehmend der Federblattabschnitt, insbesondere auf Biegung, belastet. Das elastische Material kann bei einer ansteigenden Federbelastung zunehmend komprimiert und/oder kompaktiert werden. Hierauf folgend oder gleichzeitig kann zunehmend der Federblattabschnitt belastet werden, wodurch die Blattfedereinrichtung mit steigender Federbelastung zunehmend steifer wird. Insbesondere wird der Federblattabschnitt erst ab einer vorgegebenen Federbelastung, insbesondere vorwiegend, auf Biegung belastet. Ab der vorgegebenen Federbelastung und mit weiter zunehmender Federbelastung kann der Federblattabschnitt, insbesondere zusätzlich zu einer bereits erfolgten Verformung, vorwiegend auf Biegung belastet werden. Somit kann die Steifigkeit der Blattfedereinrichtung mit ansteigender Federbelastung erhöht werden. Hierdurch ist eine progressive Federung und/oder progressive Federkennlinie realisierbar.

Nach einer Weiterbildung ist der Innenraum als ein Hohlraum in dem Federblatt ausgebildet. Der Innenraum kann vollständig innerhalb des Federblattes angeordnet sein. Insbesondere ist der Innenraum teilweise oder vollständig mit dem elastischen Material ausgefüllt. Ein Federblattabschnitt des Federblattes kann teilweise oder vollständig von dem elastischen Material umgeben sein. Insbesondere kann der Federblattabschnitt vollständig von dem elastischen Material umgeben oder von diesem eingeschlossen sein. Hierdurch kann der Federblattabschnitt zuverlässig vor Umwelteinflüssen geschützt werden.

Vorzugsweise ist der Innenraum als eine Durchgangsöffnung ausgebildet. Die Durchgangsöffnung kann sich von einer ersten Seite des Federblattes bis zu einer von der ersten Seite abgewandten zweiten Seite des Federblattes erstrecken. Insbesondere erstreckt sich der Innenraum in einen in dem Fahrzeug und/oder in einem fahrwerkmontierten Zustand der Blattfedereinrichtung quer oder rechtwinklig zu einer Fahrzeughochachse. Die Durchgangsöffnung kann mittels des elastischen Materials und/oder des Federblattabschnittes teilweise oder vollständig ausgefüllt sein.

Insbesondere ist der Innenraum zwischen einer Druckseite und einer Zugseite des Federblattes angeordnet. Hierbei kann der Federblattabschnitt selbst die Zugseite ausbilden oder aufweisen. Der Federblattabschnitt kann zwischen der Druckseite und der Zugseite des Federblattes angeordnet sein. Insbesondere ist der Federblattabschnitt zwischen der Zugseite und dem Innenraum angeordnet.

Vorzugsweise ist das Federblatt spiegelsymmetrisch zu einer Mittelebene ausgebildet. Hierbei kann sich die Mittelebene rechtwinklig zu einer Längsachse und/oder Längserstreckung der Blattfedereinrichtung und/oder einer Fahrzeuglängsachse erstrecken. Insbesondere ist die Mittelebene in einem montierten Zustand der Blattfedereinrichtung in einem Fahrwerk und/oder in einem Fahrzeug vertikal ausgerichtet. Alternativ kann die Blattfedereinrichtung und/oder das Federblatt unsymmetrisch, insbesondere zu einer zu zwei Enden des Federblattes gleich beabstandeten Mittelebene, ausgebildet sein. Die Blattfedereinrichtung kann mittels zweier voneinander abgewandter, endseitiger Befestigungseinrichtungen an einem Fahrzeugträger, Fahrzeugrahmen und/oder Fahrzeugaufbau befestigbar sein. Insbesondere dienen zwei voneinander abgewandte endseitige Befestigungseinrichtungen als Lager für die Blattfedereinrichtung. Des Weiteren kann die Blattfedereinrichtung in einem Mittelbereich, insbesondere mittig zwischen den beiden endseitigen Befestigungseinrichtungen, mit einer Achse verbunden sein. Hierzu kann die Blattfedereinrichtung eine Halteeinrichtung aufweisen. Die Achse kann als eine Radachse und/oder Starrachse ausgebildet sein. Insbesondere erstreckt sich die Achse in einem montierten Zustand in einem Fahrzeug und/oder in einem Fahrwerk in eine Richtung quer oder rechtwinklig zur Fahrzeuglängsachse.

Vorzugsweise weist das Federblatt den Innenraum auf. Somit kann der Innenraum als ein integraler Bestandteil des Federblattes selbst ausgebildet sein. Vorzugsweise ist das Federblatt mit dem Innenraum einstückig ausgebildet. Insbesondere wird der Innenraum nicht durch bloßes Aufeinanderlegen von zwei separaten bzw. eigenständigen Federblättern gebildet. Vorzugsweise weist die Blattfedereinrichtung und/oder das Federblatt einen ersten Innenraum mit dem elastischen Material und einen zweiten Innenraum mit dem elastischen Material auf. Insbesondere sind die beiden Innenräume voneinander beabstandet und/oder räumlich voneinander getrennt. Die beiden Innenräume können auf einer gemeinsamen Längsachse des Federblattes angeordnet sein. Der erste Innenraum und der zweite Innenraum können spiegelsymmetrisch zueinander und/oder zu einer Mittelebene des Federblattes ausgebildet sein.

Nach einer auch eigenständig und unabhängig von der vorliegenden Anmeldung denkbaren Ausführungsform ist ein Federblattabschnitt des Federblattes bis zum Erreichen einer vorgegebenen Federbelastung vorwiegend auf Streckung belastbar. Vorzugsweise ist der Federblattabschnitt ab der vorgegebenen Federbelastung bzw. ab Erreichen der vorgegebenen Federbelastung vorwiegend auf Biegung belastbar. Hierbei kann die Belastung auf Biegung zusätzlich zu der bereits erreichten Streckbelastung erfolgen. Die Streckbelastung des Federblattabschnittes ab der vorgegebenen Federbelastung und mit weiter zunehmender Federbelastung kann im Wesentlichen konstant bleiben, ebenfalls weiter zu nehmen oder abnehmen.

Insbesondere sind als alternative oder gleichbedeutende Begriffe für "vorwiegend" zu verstehen: überwiegend, im Wesentlichen, hauptsächlich. Vorzugsweise ist bei einer vorwiegenden Streckung der Anteil der Streckung an einer Verformung des Federblattes größer als 50 %, größer als 75 % oder größer als 90 %. Bei einer vorwiegenden Biegung kann der Anteil der Biegung an der Verformung größer als 50 %, größer als 75 % oder größer als 90 % sein.

Somit kann eine Blattfedereinrichtung realisiert werden, bei der in einem ersten Betriebsmodus der Federblattabschnitt vorwiegend auf Streckung belastet wird und in einem weiteren Betriebsmodus der Federblattabschnitt, insbesondere zusätzlich zu der bereits erreichten Streckbelastung, vorwiegend auf Biegung belastet wird.

Gemäß einer Weiterbildung ist ein Federblattabschnitt des Federblattes in einem unbelasteten Zustand der Blattfedereinrichtung konvex, insbesondere nach außen, gewölbt. Insbesondere ist der Federblattabschnitt in einem unbelasteten, unmontierten oder in einem unbelasteten, montierten Zustand der Blattfedereinrichtung in einem Fahrzeug in Richtung einer Fahrzeughochachse konvex nach außen und/oder nach oben gewölbt. Hierbei kann der Federblattabschnitt als ein Bereich einer Zugseite des Federblattes ausgebildet sein.

Gemäß einer weiteren Ausführungsform ist eine Seite oder eine Zugseite des Federblattes, insbesondere in einem unbelasteten Zustand der Blattfedereinrichtung, wellenartig ausgebildet. Hierbei kann ein Federblattabschnitt des Federblattes als ein Wellenberg ausgebildet sein, wobei der Federblattabschnitt und/oder der Wellenberg im Bereich des Innenraums angeordnet ist. Insbesondere ist aufgrund der Ausbildung des Federblattabschnittes als ein Wellenberg der Innenraum realisiert.

Gemäß einer auch eigenständig und unabhängig von der vorliegenden Anmeldung denkbaren Ausführungsform erstreckt sich ein Federblattabschnitt des Federblattes schwertartig in den Innenraum. Hierbei kann das elastische Material einerseits an einem Innenumfang des Innenraums und andererseits an einem Außenumfang des schwertartigen Federblattabschnittes anliegen. Insbesondere ist das elastische Material fest mit dem Innenumfang des Innenraums und fest mit dem Außenumfang des schwertartigen Federblattabschnittes verbunden. Ausgehend von einem unbelasteten Zustand der Blattfedereinrichtung kann das elastische Material mit steigender Federbelastung zunehmend komprimiert und hierdurch zunehmend der schwertartige Federblattabschnitt belastet werden. Insbesondere wird das elastische Material, das den schwertartigen Federblattabschnitt umgibt, bei einer ansteigenden Federbelastung zunehmend verformt und/oder kompaktiert. Hierauf folgend oder gleichzeitig wird zunehmend der schwertartige Federblattabschnitt belastet, wodurch die Blattfedereinrichtung mit steigender Federbelastung zunehmend steifer wird.

Nach einer weiteren Ausführungsform erstreckt sich der schwertartige Federblattabschnitt, insbesondere ausgehend von einem Mittelbereich des Federblattes, in Längsrichtung des Federblattes und/oder in Richtung eines Endes des Federblattes.

Vorzugsweise ist der schwertartige Federblattabschnitt einstückig mit dem Mittelbereich und/oder dem Federblatt ausgebildet. Insbesondere erstreckt sich ein erster schwertartiger Federblattabschnitt ausgehend von dem Mittelbereich in Richtung eines ersten Endes des Federblattes und ein zweiter Federblattabschnitt ausgehend von dem Mittelbereich in Richtung eines von dem ersten Ende abgewandten zweiten Endes des Federblattes. Hierbei können der erste schwertartige Federblattabschnitt in einem ersten Innenraum und der zweite schwertartige Federblattabschnitt in einem zweiten Innenraum des Federblattes angeordnet sein.

Vorzugsweise ist die Blattfedereinrichtung einblättrig ausgebildet. Bei einer einblättrigen Ausbildung der Blattfedereinrichtung ist somit ein einziges Federblatt vorgesehen. Alternativ ist denkbar, dass die Blattfedereinrichtung mehrblättrig, insbesondere zweiblättrig, ausgebildet ist. Bei einer zweiblättrigen Ausbildung der Blattfedereinrichtung weist diese ein erstes Federblatt und ein zweites Federblatt auf. Insbesondere sind das erste Federblatt und das zweite Federblatt zum Ausbilden des mindestens einen Innenraumes zwischen dem ersten Federblatt und dem zweiten Federblatt miteinander verbunden. Hierbei können das erste Federblatt und das zweite Federblatt zum Ausbilden des Innenraumes im Bereich des Innenraumes voneinander beabstandet sein. Die Verbindung des ersten Federblattes und des zweiten Federblattes kann stoffschlüssig ausgebildet sein.

Insbesondere ist das Federblatt aus einem Faserkunststoffverbund und/oder einem Glasfaserkunststoffverbund hergestellt. Das Federblatt kann aus mehreren Faserlagen gebildet sein. Insbesondere sind die Faserlagen mittels eines Matrixmaterials getränkt und/oder miteinander verbunden. Die Verwendung von faserverstärktem Kunststoff für die Ausbildung des Federblattes ermöglicht, insbesondere im Vergleich mit einer Blattfedereinrichtung mit einem metallenen Federblatt, eine Gewichtseinsparung. Insbesondere ist das Federblatt als eine Längsblattfeder oder eine Querblattfeder ausgebildet. Bei einer Ausbildung als eine Längsblattfeder kann sich die Blattfedereinrichtung und/oder das Federblatt in einem montierten Zustand in Längsrichtung eines Fahrzeugs bzw. Kraftfahrzeugs erstrecken.

Von besonderem Vorteil ist ein Fahrwerk mit einer erfindungsgemäßen Blattfedereinrichtung für ein Fahrzeug oder Kraftfahrzeug. Hierbei kann das Federblatt, insbesondere mittels einer Halteeinrichtung, mit einer Achse verbunden sein. Eine Steifigkeit der Blattfedereinrichtung kann in einem ersten Betriebsmodus geringer als in einem weiteren Betriebsmodus sein. Vorzugsweise erfolgt in dem ersten Betriebsmodus vorwiegend eine, insbesondere zunehmende, Komprimierung des elastischen Materials in den Innenraum. In dem weiteren Betriebsmodus kann aufgrund des komprimierten elastischen Materials eine, insbesondere zunehmende, Biegung des Federblattabschnittes mit zunehmender Federbelastung erfolgen. Insbesondere ist die Blattfedereinrichtung unterhalb einer vorgegebenen Federbelastung in dem ersten Betriebsmodus und ab der vorgegebenen Federbelastung in dem weiteren Betriebsmodus.

Des Weiteren ist ein Verfahren zum Herstellen einer erfindungsgemäßen Blattfedereinrichtung und/oder eines erfindungsgemäßen Fahrwerks von Vorteil. Hierbei wird ein Federblatt aus einem faserverstärkten Kunststoff hergestellt. Es wird ein Innenraum ausgebildet, in dem ein elastisches Material angeordnet und/oder eingebracht wird. Insbesondere wird das Federblatt derart hergestellt, dass das Federblatt den Innenraum aufweist und/oder bildet. Zunächst kann das Federblatt mit dem Innenraum hergestellt werden und hiernach folgend kann das elastische Material in den Innenraum eingebracht werden. Hierbei kann das elastische Material zwischen dem Federblatt und einem Federblattabschnitt des Federblattes angeordnet werden, wobei der Federblattabschnitt erst ab einer vorgegebenen Federbelastung zunehmend oder vorwiegend auf Biegung belastet wird. Insbesondere wird ab der vorgegebenen Federbelastung und mit zunehmender Federbelastung der Federblattabschnitt, insbesondere zusätzlich zu einer bereits erfolgten Verformung vorwiegend auf Biegung belastet.

Insbesondere werden das Federblatt und das elastische Material lagenartig und/oder schichtartig hergestellt. Vorzugsweise wird die Blattfedereinrichtung schichtartig und/oder lagenartig aufgebaut und/oder hergestellt. Somit kann die Blattfedereinrichtung selbst bzw. als Ganzes schichtweise realisiert und/oder aufgebaut werden. Hierbei kann zunächst ein erster und/oder unterster Teilbereich des Federblattes aufgebaut und/oder hergestellt werden. Anschließend wird das elastische Material auf den ersten und/oder untersten Teilbereich des Federblattes angeordnet, aufgebaut und/oder hergestellt. Sodann kann ein weiterer und/oder oberster Teilbereich des Federblattes auf das elastische Material angeordnet, aufgebaut und/oder hergestellt werden. Parallel und/oder gleichzeitig zum Aufbauen bzw. Herstellen des elastischen Materialbereichs können Endbereiche und/oder ein Mittelbereich des Federblattes aufgebaut und/oder hergestellt werden. Mittels dieser Endbereiche können ein erstes Ende und ein zweites Ende des Federblattes realisiert werden. Der Mittelbereich kann zwischen zwei elastischen Materialbereichen angeordnet werden. Nach dem Aufbau der Blattfedereinrichtung kann ein faserverstärkter Kunststoff des Federblattes mittels eines geeigneten Verfahrens konsolidiert und/oder ausgehärtet werden. Hierbei kann es sich beispielsweise um ein RTM-Verfahren handeln (RTM: Resin Transfer Moulding).

Insbesondere wird ein kontinuierlicher, insbesondere lagenartiger oder schichtartiger, Aufbau der Blattfedereinrichtung ermöglicht. Gemäß einer weiteren Alternative können das Federblatt und das elastische Material gleichzeitig oder parallel, insbesondere unabhängig voneinander, hergestellt werden.

Insbesondere handelt es sich bei der gemäß dem erfindungsgemäßen Verfahren hergestellten Blattfedereinrichtung um eine zuvor beschriebene erfindungsgemäße Blattfedereinrichtung. Vorzugsweise ist das Verfahren gemäß allen im Zusammenhang mit der hier beschriebenen erfindungsgemäßen Blattfedereinrichtung erläuterten Ausgestaltungen weitergebildet. Ferner kann die hier beschriebene Blattfedereinrichtung gemäß allen im Zusammenhang mit den Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine geschnittene Seitenansicht einer erfindungsgemäßen ersten Blattfedereinrichtung,
- Fig. 2: einen Ausschnitt der geschnittenen Seitenansicht der erfindungsgemäßen ersten Blattfedereinrichtung gemäß Fig. 1,
- Fig. 3: eine geschnittene Seitenansicht einer erfindungsgemäßen weiteren Blattfedereinrichtung, und
- Fig. 4: einen Ausschnitt der geschnittenen Seitenansicht der erfindungsgemäßen weiteren Blattfedereinrichtung gemäß Fig. 3.

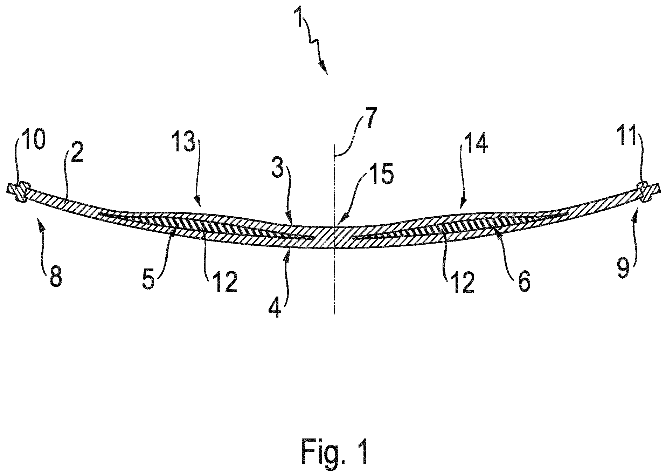

Figur 1 zeigt eine geschnittene Seitenansicht einer erfindungsgemäßen ersten Blattfedereinrichtung 1. Die Blattfedereinrichtung 1 ist bei diesem Ausführungsbeispiel einblättrig ausgebildet und weist somit ein einziges Federblatt 2 auf. Das Federblatt 2 ist als ein Faserkunststoffverbund, bei diesem Ausführungsbeispiel als ein Glasfaserkunststoffverbund, realisiert. In dem hier dargestellten unbelasteten Zustand des Federblattes 2 ist dieses gekrümmt bzw. gebogen. Das Federblatt 2 weist eine Zugseite 3 und eine von der Zugseite 3 abgewandte angeordnete Druckseite 4 auf. In einem hier nicht näher dargestellten montierten Zustand des Federblattes 2 bzw. der Blattfedereinrichtung 1 in einem Fahrzeug oder Fahrwerk stellt die Zugseite 3 zugleich eine Oberseite und die Druckseite 4 zugleich eine Unterseite des Federblattes 2 dar.

Die Blattfedereinrichtung 1 bzw. das Federblatt 2 hat bei diesem Ausführungsbeispiel einen ersten Innenraum 5 und einen zweiten Innenraum 6. Die beiden Innenräume 5, 6 sind separat zueinander bzw. voneinander beabstandet angeordnet. Hierbei sind die Innenräume 5, 6 integraler Bestandteil des Federblattes 2. Die beiden Innenräume 5, 6 sind spiegelsymmetrisch zu einer Mittelebene 7 ausgebildet. Auch das Federblatt 2 ist spiegelsymmetrisch zu der Mittelebene 7 ausgebildet. Die Mittelebene 7 ist in einem montierten Zustand der Blattfedereinrichtung 1 vertikal ausgerichtet. Des Weiteren erstreckt sich die Mittelebene 7 rechtwinklig zur Längserstreckung der Blattfedereinrichtung 1. Bei einer Ausbildung des Federblattes 2 als eine Längsblattfeder erstreckt sich die Mittelebene 7 in dem montierten Zustand zudem rechtwinklig zu einer Fahrzeuglängsachse.

Das Federblatt 2 weist an zwei voneinander abgewandten Enden 8, 9 des Federblattes 2 jeweils eine hier lediglich schematisch dargestellte Befestigungseinrichtung 10 bzw. 11 auf. Mittels der Befestigungseinrichtungen 10, 11 ist die Blattfedereinrichtung 1 mit einem hier nicht näher dargestellten Fahrzeugrahmen und/oder Fahrzeugaufbau verbindbar.

In den Innenräumen 5, 6 ist jeweils ein elastisches Material, hier nämlich ein Elastomermaterial, 12 angeordnet bzw. eingebracht. Bei diesem Ausführungsbeispiel sind die Innenräume 5, 6 vollständig mit dem elastischen Material 12 ausgefüllt. Das Federblatt 2 weist einen ersten Federblattabschnitt 13 und einen zweiten Federblattabschnitt 14 auf. Der erste Federblattabschnitt 13 ist dem ersten Innenraum 5 und der zweite Federblattabschnitt 14 dem zweiten Innenraum 6 zugeordnet. Die beiden Federblattabschnitte 13, 14 sind auf der Zugseite 3 des Federblattes 2 angeordnet. Auch die beiden Federblattabschnitte 13, 14 sind spiegelsymmetrisch zu der Mittelebene 7 ausgebildet.

Die Federblattabschnitte 13, 14 sind in dem hier dargestellten unbelasteten Zustand der Blattfedereinrichtung 1 konvex nach außen gewölbt. Hierdurch sind zugleich die Innenräume 5, 6 gebildet. Aufgrund der konvex nach außen gewölbten Ausbildung der beiden Federblattabschnitte 13, 14 ergibt sich insgesamt eine wellenartige Ausbildung der Zugseite 3. Hierbei bilden die Federblattabschnitte 13, 14 jeweils einen Wellenberg. Zwischen den Federblattabschnitten 13, 14 ist ein Mittelbereich 15 des Federblattes 2. Dieser Mittelbereich 15 bildet zugleich ein Wellental zwischen den beiden Wellenbergen, gebildet durch die Federblattabschnitte 13, 14. Ausgehend von dem Federblattabschnitt 13 bzw. 14 und in Richtung des jeweils nächstliegenden Endes 8 bzw. 9 ist eine Art weiteres Wellental im Bereich der Zugseite 3 gebildet.

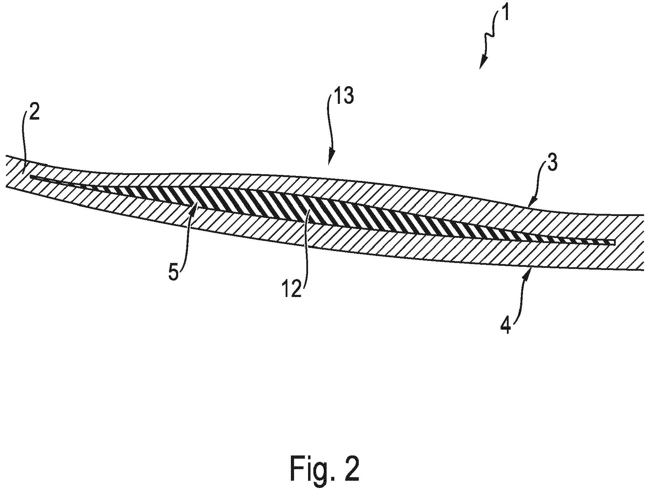

Figur 2 zeigt einen Ausschnitt der geschnittenen Seitenansicht der erfindungsgemäßen ersten Blattfedereinrichtung 1 gemäß Figur 1. Zu erkennen ist der erste Federblattabschnitt 13 und der erste Innenraum 5. Ausgehend von dem hier dargestellten unbelasteten Zustand und mit zunehmender Federbelastung wird die Zugseite 3 gestreckt. Gleichzeitig wird die Druckseite 4 auf Biegung belastet. Mit zunehmender Federbelastung wird das elastische Material 12 in dem Innenraum 5 bzw. 6 zunehmend komprimiert. Aufgrund der Streckbelastung des ersten Federblattabschnittes 13 bzw. analog auch des zweiten Federblattabschnittes 14 bewegen sich die Federblattabschnitte 13, 14 in Richtung der Druckseite 4 des Federblattes 2. Hierdurch erfolgt eine Verformung bzw. eine Kompaktierung des elastischen Materials 12.

Die Komprimierung des elastischen Materials 12 erfolgt bis zu einer vorgegebenen Federbelastung. Ab der vorgegebenen Federbelastung ist keine weitergehende Komprimierung des elastischen Materials 12 möglich. Bei einer weiter zunehmenden Federbelastung erfolgt daher anstelle einer weiteren Streckung der Zugseite 3 eine vorwiegende Belastung auf Biegung. Hierdurch ist die Steifigkeit der gesamten Blattfedereinrichtung 1 bzw. des Federblattes 2 verstärkt. Aufgrund des Zusammenwirkens der Druckseite 4, der Zugseite 3, der Federblattabschnitte 13, 14 und des elastischen Materials 12 ist eine progressive Federung realisierbar. Hierbei nimmt die Steifigkeit der Blattfedereinrichtung 1 bzw. des Federblattes 2 mit zunehmender Federbelastung kontinuierlich zu.

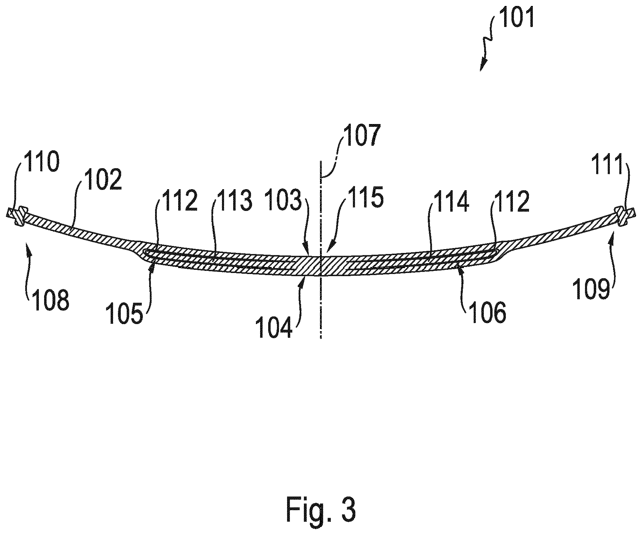

Figur 3 zeigt eine geschnittene Seitenansicht einer erfindungsgemäßen weiteren Blattfedereinrichtung 101. Die Blattfedereinrichtung 101 ist bei diesem Ausführungsbeispiel einblättrig ausgebildet und weist somit ein einziges Federblatt 102 auf. Das Federblatt 102 ist als ein Faserkunststoffverbund, bei diesem Ausführungsbeispiel als ein Glasfaserkunststoffverbund, realisiert. In dem hier dargestellten unbelasteten Zustand des Federblattes 102 ist dieses gekrümmt bzw. gebogen. Das Federblatt 102 weist eine Zugseite 103 und eine von der Zugseite 103 abgewandte angeordnete Druckseite 104 auf. In einem hier nicht näher dargestellten montierten Zustand des Federblattes 102 bzw. der Blattfedereinrichtung 101 in einem Fahrzeug oder Fahrwerk stellt die Zugseite 103 zugleich eine Oberseite und die Druckseite 104 zugleich eine Unterseite des Federblattes 102 dar.

Die Blattfedereinrichtung 101 bzw. das Federblatt 102 hat bei diesem Ausführungsbeispiel einen ersten Innenraum 105 und einen zweiten Innenraum 106. Die beiden Innenräume 105, 106 sind separat zueinander bzw. voneinander beabstandet angeordnet. Hierbei sind die Innenräume 105, 106 integraler Bestandteil des Federblattes 102. Die beiden Innenräume 105, 106 sind spiegelsymmetrisch zu einer Mittelebene 107 ausgebildet. Auch das Federblatt 102 ist spiegelsymmetrisch zu der Mittelebene 107 ausgebildet. Die Mittelebene 107 ist in einem montierten Zustand der Blattfedereinrichtung 101 vertikal ausgerichtet. Des Weiteren erstreckt sich die Mittelebene 107 rechtwinklig zur Längserstreckung der Blattfedereinrichtung 101. Bei einer Ausbildung des Federblattes 102 als eine Längsblattfeder erstreckt sich die Mittelebene 107 in dem montierten Zustand zudem rechtwinklig zu einer Fahrzeuglängsachse.

Das Federblatt 102 weist an zwei voneinander abgewandten Enden 108, 109 des Federblattes 102 jeweils eine hier lediglich schematisch dargestellte Befestigungseinrichtung 110 bzw. 111 auf. Mittels der Befestigungseinrichtungen 110, 111 ist die Blattfedereinrichtung 101 mit einem hier nicht näher dargestellten Fahrzeugrahmen und/oder Fahrzeugaufbau verbindbar.

In den Innenräumen 105, 106 ist jeweils ein elastisches Material, hier nämlich ein Elastomermaterial, 112 angeordnet bzw. eingebracht. Das Federblatt 102 weist einen ersten Federblattabschnitt 113 und einen zweiten Federblattabschnitt 114 auf. Der erste Federblattabschnitt 113 ist dem ersten Innenraum 105 und der zweite Federblattabschnitt 114 dem zweiten Innenraum 106 zugeordnet. Bei diesem Ausführungsbeispiel sind die Federblattabschnitte 113, 114 schwertartig ausgebildet. Ausgehend von einem Mittelbereich 115 des Federblattes 102 erstrecken sich die Federblattabschnitte 113, 114 in Richtung des Endes 108 bzw. 109. Die Innenräume 105, 106 sind bei diesem Ausführungsbeispiel zwischen einer Innenseite bzw. einem Innenumfang der Innenräume 105, 106 und einem Außenumfang der schwertartigen Federblattabschnitte 113, 114 mit dem elastischen Material 12 ausgefüllt. Die beiden Federblattabschnitte 113, 114 sind spiegelsymmetrisch zu der Mittelebene 7 ausgebildet.

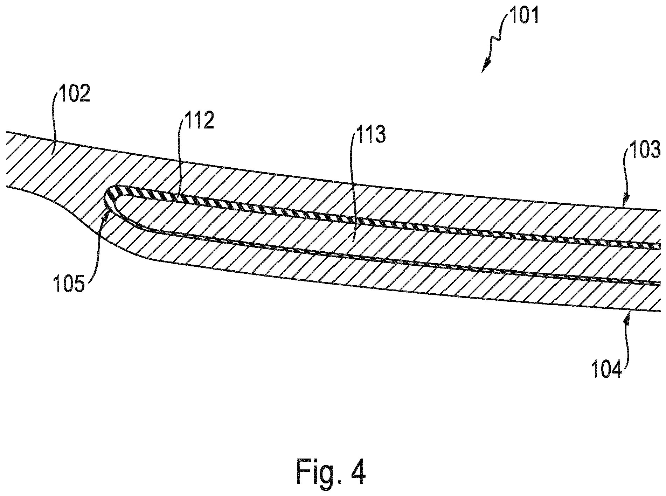

Figur 4 zeigt einen Ausschnitt der geschnittenen Seitenansicht der erfindungsgemäßen ersten Blattfedereinrichtung 101 gemäß Figur 1. Zu erkennen ist der erste Federblattabschnitt 113 und der erste Innenraum 105. Ausgehend von dem hier dargestellten unbelasteten Zustand und mit zunehmender Federbelastung wird das elastische Material 112 in dem Innenraum 105 bzw. analog hierzu in dem Innenraum 106 zunehmend zwischen der der Zugseite 103 zugewandten Außenseite des Federblattabschnittes 113 bzw. 114 und der von der Zugseite 103 abgewandten Innenseite des Innenraumes 105 bzw. 106 verformt.

Die Verformung und/oder Verzwängung des elastischen Materials 112 erfolgt bis zu einer vorgegebenen Federbelastung. Ab der vorgegebenen Federbelastung ist keine weitergehende Komprimierung des elastischen Materials 112 möglich. Bei einer weiter zunehmenden Federbelastung erfolgt daher eine zusätzliche Belastung des Federblattabschnittes 113 bzw. 114 auf Biegung. Hierdurch ist die Steifigkeit der gesamten Blattfedereinrichtung 101 bzw. des Federblattes 102 verstärkt. Hierdurch ist eine progressive Federung realisierbar. Hierbei nimmt die Steifigkeit der Blattfedereinrichtung 101 bzw. des Federblattes 102 mit zunehmender Federbelastung kontinuierlich zu.

### Bezugszeichen

- 1: Blattfedereinrichtung
- 2: Federblatt
- 3: Zugseite
- 4: Druckseite
- 5: erster Innenraum
- 6: zweiter Innenraum
- 7: Mittelebene
- 8: Ende
- 9: Ende
- 10: Befestigungseinrichtung
- 11: Befestigungseinrichtung
- 12: elastisches Material
- 13: erster Federblattabschnitt
- 14: zweiter Federblattabschnitt
- 15: Mittelbereich

- 101: Blattfedereinrichtung
- 102: Federblatt
- 103: Zugseite
- 104: Druckseite
- 105: erster Innenraum
- 106: zweiter Innenraum
- 107: Mittelebene
- 108: Ende
- 109: Ende
- 110: Befestigungseinrichtung
- 111: Befestigungseinrichtung
- 112: elastisches Material
- 113: erster Federblattabschnitt
- 114: zweiter Federblattabschnitt
- 115: Mittelbereich

## Patentansprüche

1. Blattfedereinrichtung für ein Fahrzeug mit einem Federblatt (2, 102) aus einem faserverstärkten Kunststoff, **gekennzeichnet durch** einen Innenraum (5, 6, 105, 106), wobei der Innenraum (5, 6, 105, 106) mindestens teilweise oder vollständig mit einem elastischen Material (12, 112) ausgefüllt oder unausgefüllt ist.

2. Blattfedereinrichtung nach Anspruch 1, **dadurch gekennzeichnet, dass** das elastische Material (12, 112), insbesondere ein Elastomermaterial, zwischen einer Innenseite des Innenraums (5, 6, 105, 106) und einem Federblattabschnitt (13, 14, 113, 114) des Federblattes (2, 102) angeordnet ist, insbesondere liegt das elastische Material (12, 112) einerseits an einer Innenseite des Innenraumes (5, 6, 105, 106) und andererseits an einer Innenseite oder einem Außenumfang des Federblattabschnittes (13, 14, 113, 114) an.

3. Blattfedereinrichtung nach einem der vorhergehenden Ansprüche, **dadurch gekennzeichnet, dass** aufgrund des Innenraumes und/oder eines Zusammenwirkens des elastischen Materials (12, 112) und eines dem Innenraum (5, 6, 105, 106) zugeordneten Federblattabschnittes (13, 14, 113, 114) des Federblattes (2, 102) eine die Steifigkeit der Blattfedereinrichtung (1, 101) erhöhende Federung und/oder eine progressive Federung realisierbar ist, insbesondere bei einer sich mit steigernder Federbelastung zunehmenden Biegung des Federblattes (2, 102).

4. Blattfedereinrichtung nach Anspruch 2 oder 3, **dadurch gekennzeichnet, dass** das Federblatt (2, 102), der Federblattabschnitt (13, 14, 113, 114) und das elastische Material (12, 112) zum Realisieren einer die Steifigkeit der Blattfedereinrichtung (1, 101) erhöhende Federung und/oder einer progressiven Federung ausgebildet sind, wobei ausgehend von einem unbelasteten Zustand der Blattfedereinrichtung (1, 101) das elastische Material (12, 112) mit steigender Federbelastung zunehmend verformt wird, vorzugsweise wird hierdurch zunehmend der Federblattabschnitt (13, 14, 113, 114), insbesondere auf Biegung, belastet.

5. Blattfedereinrichtung nach einem der vorhergehenden Ansprüche, **dadurch gekennzeichnet, dass** der Innenraum (5, 6, 105, 106) als ein Hohlraum in dem Federblatt (2, 102) ausgebildet ist oder sich der Innenraum (5, 6, 105, 106) als eine Durchgangsöffnung von einer ersten Seite des Federblattes (2, 102) bis zu einer von der ersten Seite abgewandten zweiten Seite des Federblattes (2, 102) erstreckt, insbesondere erstreckt sich der Innenraum (5, 6, 105, 106) in einem in dem Fahrzeug montierten Zustand der Blattfedereinrichtung (1, 101) quer oder rechtwinklig zu einer Fahrzeughochachse.

6. Blattfedereinrichtung nach einem der vorhergehenden Ansprüche, **dadurch gekennzeichnet, dass** das Federblatt (2, 102) spiegelsymmetrisch zu einer Mittelebene (7, 107) ausgebildet ist, wobei sich die Mittelebene (7, 107) rechtwinklig zu einer Längserstreckung und/oder Längsachse der Blattfedereinrichtung (1, 101) erstreckt, insbesondere ist die Blattfedereinrichtung (1, 101) mittels zweier voneinander abgewandter, endseitiger Befestigungseinrichtungen (10, 11, 110, 111) an einem Fahrzeugträger, Fahrzeugrahmen und/oder Fahrzeugaufbau befestigbar.

7. Blattfedereinrichtung nach einem der vorhergehenden Ansprüche, **dadurch gekennzeichnet, dass** das Federblatt (2, 102) den Innenraum (5, 6, 105, 106) aufweist, vorzugsweise weist die Blattfedereinrichtung (1, 101) und/oder das Federblatt (2, 102) einen ersten Innenraum (5, 105) mit dem elastischen Material (12, 112) und einen zweiten Innenraum (6, 106) mit dem elastischen Material (12, 112) auf, insbesondere sind der erste Innenraum (5, 105) und der zweite Innenraum (6, 106) spiegelsymmetrisch zueinander und/oder zu einer Mittelebene (7, 107) des Federblattes (2, 102) ausgebildet.

8. Blattfedereinrichtung nach einem der vorhergehenden Ansprüche, **dadurch gekennzeichnet, dass** ein Federblattabschnitt (13, 14) des Federblattes (2) bis zum Erreichen einer vorgegebenen Federbelastung vorwiegend auf Streckung belastbar ist, vorzugsweise ist der Federblattabschnitt (13, 14) ab der vorgegebenen Federbelastung vorwiegend, insbesondere zusätzlich zu der bereits erreichten Streckbelastung, auf Biegung belastbar.

9. Blattfedereinrichtung nach einem der vorhergehenden Ansprüche, **dadurch gekennzeichnet, dass** ein Federblattabschnitt (13, 14) des Federblattes (2) in einem unbelasteten Zustand der Blattfedereinrichtung (1) konvex gewölbt ist, insbesondere ist der Federblattabschnitt (13, 14) in einem unbelasteten und montierten Zustand der Blattfedereinrichtung (1) in einem Fahrzeug in Richtung einer Fahrzeughochachse konvex nach außen gewölbt, vorzugsweise ist der Federblattabschnitt (13, 14) als ein Bereich einer Zugseite (3) des Federblattes (2) ausgebildet.

10. Blattfedereinrichtung nach einem der vorhergehenden Ansprüche, **dadurch gekennzeichnet, dass** eine Seite oder eine Zugseite (3) des Federblattes (2), insbesondere in einem unbelasteten Zustand der Blattfedereinrichtung (1), wellenartig ausgebildet ist, vorzugsweise ist ein Federblattabschnitt (13, 14) des Federblattes (2) als ein Wellenberg ausgebildet, wobei der Federblattabschnitt (13, 14) und/oder der Wellenberg im Bereich des Innenraums (5, 6) angeordnet ist.

11. Blattfedereinrichtung nach einem der vorhergehenden Ansprüche, **dadurch gekennzeichnet, dass** sich ein Federblattabschnitt (113, 114) des Federblattes (102) schwertartig in den Innenraum (105, 106) erstreckt, insbesondere liegt das elastische Material (12) einerseits an einem Innenumfang des Innenraums (105, 106) und andererseits an einem Außenumfang des schwertartigen Federblattabschnittes (113, 114) an.

12. Blattfedereinrichtung nach Anspruch 11, **dadurch gekennzeichnet, dass** sich der schwertartige Federblattabschnitt (113, 114), insbesondere ausgehend von einem Mittelbereich (115) des Federblattes (102), in Längsrichtung des Federblattes (102) und/oder in Richtung eines Endes (108, 109) des Federblattes (102) erstreckt, vorzugsweise erstreckt sich ein erster schwertartiger Federblattabschnitt (113) ausgehend von dem Mittelbereich (115) in Richtung eines ersten Endes (108) des Federblattes (102) und ein zweiter Federblattabschnitt (114) ausgehend von dem Mittelbereich (115) in Richtung eines von dem ersten Ende (108) abgewandten zweiten Endes (109) des Federblattes (102).

13. Blattfedereinrichtung nach einem der vorhergehenden Ansprüche, **dadurch gekennzeichnet, dass** die Blattfedereinrichtung (1, 101) einblättrig oder mehrblättrig ausgebildet ist, insbesondere ist die Blattfedereinrichtung zweiblättrig ausgebildet, wobei ein erstes Federblatt und ein zweites Federblatt zum Ausbilden des mindestens einen Innenraumes (5, 6, 105, 106) zwischen dem ersten Federblatt und dem zweiten Federblatt, vorzugsweise stoffschlüssig, miteinander verbunden sind.

14. Blattfedereinrichtung nach einem der vorhergehenden Ansprüche, **dadurch gekennzeichnet, dass** das Federblatt (2, 102) aus einem Faserkunststoffverbund und/oder einem Glasfaserkunststoffverbund hergestellt ist, insbesondere ist das Federblatt (2, 102) als eine Längsblattfeder ausgebildet.

15. Fahrwerk mit einer Blattfedereinrichtung (1, 101) nach einem der vorhergehenden Ansprüche für ein Fahrzeug oder Kraftfahrzeug.

16. Verfahren zum Herstellen einer Blattfedereinrichtung (1, 101) nach einem der vorhergehenden Ansprüche 1 bis 13 und/oder eines Fahrwerks nach Anspruch 14.
